# EUROPEAN PATENT APPLICATION

(11) **EP 2 753 085 A1**
(43) Date of publication of application: **09.07.2014**
(21) Application number: 13159135.6
(22) Date of filing: 14.03.2013
(51) Int. Cl.: H04N 13/04, G06F 3/01, G06F 3/0481

(54) **Image processing for control of point of view**

(30) Priority: 08.01.2013 US 201361750218 P
(71) Applicant: QNX Software Systems Limited, Kanata, Ontario K2K 0B3 (CA)
(72) Inventor: Rigley, Mark John, Kanata, Ontario K2K 0B3 (CA)
(74) Representative: Hibbert, Juliet Jane Grace

(57) **Abstract**

In a system and method that provides a remote point of view, a user views an image (e.g., captured by an imaging device such as a camera) on a display. The position of the user's head relative to display device is detected and the image is processed in response to a 'point of view' derived from the position of the user's head relative to the display device. A change in the position of the user's head relative to the display device may be detected and the image may be reprocessed in response to a revised 'point of view' derived from the change in position of the user's head relative to the display device.

## Description

### BACKGROUND

### 1. Cross-Reference to Related Applications

This application claims priority from U.S. Provisional Patent Application Serial No. 61/750,218, filed January 8, 2013, the entirety of which is incorporated herein by reference.

### 2. Technical Field

The present disclosure relates to the field of remote imaging. In particular, to a system and method for remote point of view processing of an image presented on a display device.

### 3. Related Art

There are numerous applications in which images captured by a camera are viewed remotely by a viewer of a display device. Images presented on the display device (e.g., a scene) are represented from a 'point of view' that is a function of a direction in which the camera is oriented.

When the viewer would prefer to view the scene from a different 'point of view', a steerable mechanism is typically used to change the physical orientation of the camera. It may be desirable to have the viewer control the 'point of view' without the need to change the physical orientation of the camera.

### BRIEF DESCRIPTION OF DRAWINGS

The system and method may be better understood with reference to the following drawings and description. The components in the figures are not necessarily to scale, emphasis instead being placed upon illustrating the principles of the disclosure. Moreover, in the figures, like referenced numerals designate corresponding parts throughout the different views.

Other systems, methods, features and advantages will be, or will become, apparent to one with skill in the art upon examination of the following figures and detailed description. It is intended that all such additional systems, methods, features and advantages be included with this description and be protected by the following claims.

Figs. 1A-1E are schematic representations of a scene viewed from a first remote point of view.

Figs. 2A-2E are schematic representations of a scene viewed from a second remote point of view.

Fig. 3 is a schematic representation of a vehicle showing alternative camera and display placements.

Fig. 4 is a schematic representation of components a system for remote point of view.

Fig. 5 is flow diagram representing a method for remote point of view.

Fig. 6 is a further schematic representation of a system for remote point of view.

### DETAILED DESCRIPTION

In a system and method for remote point of view a user views an image (e.g., captured by an imaging device such as a camera) in a display. The position of the user's head relative to a display device is detected and the image is processed in response to a 'point of view' derived from the position of the user's head relative to the display device. A change in the position of the user's head relative to the display device may be detected and the image may be reprocessed in response to a revised 'point of view' derived from the change in position of the user's head relative to the display device.

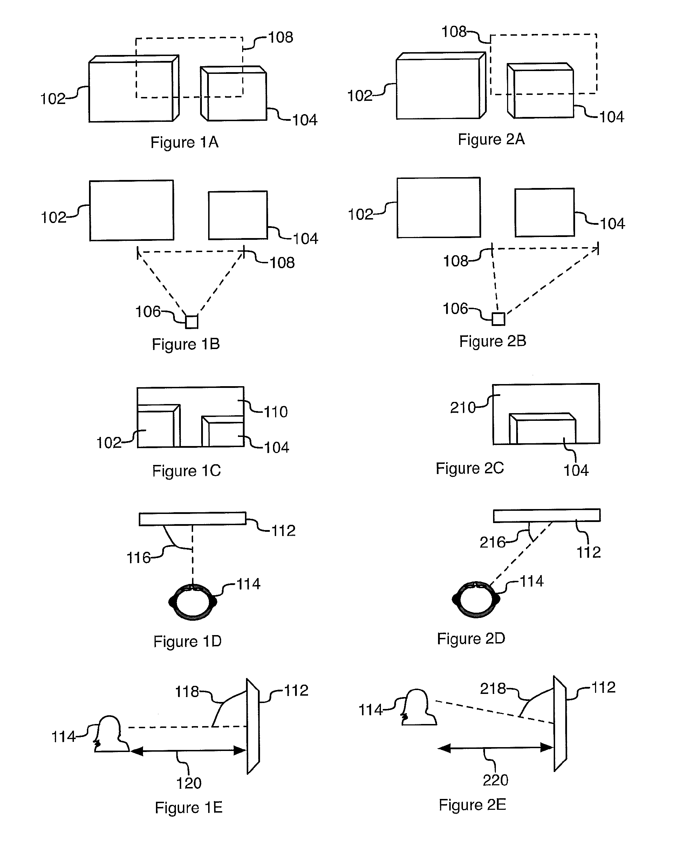

Figures 1A-1E are schematic representations of a scene viewed from a first remote point of view. Figure 1A is a front view showing two objects 102 and 104, that are within the field of view of a camera, and a scene capture area 108. Figure 1B is a top view showing the two objects 102 and 104, the camera 106, and the scene capture area 108. Figure 1C is a representation of an image 110 defined by the scene capture area 108 and captured by the camera 106. The image 110 includes representations of portions of the two objects 102 and 104 visible to the camera 106, in the scene capture area 108. Figure 1D is a top view showing a display device 112 and a user's head 114. The position of the user's head 114 relative to the display device 112 may include a horizontal angle 116. Figure 1E is a side view showing the display device 112 and the user's head 114. The position of the user's head 114 relative to the display device 112 may further include a vertical angle 118 and/or a distance 120. The position of the user's head 114 relative to the display device 112, including the horizontal angle 116, the vertical angle 118 and the distance 120, may be used to determine the scene capture area 108 that defines a scene depicted in the image 110. The image 110 may represent a remote point of view associated with the position of the user's head. The point of view is remote in that it may be derived from the position of the user's head 114 relative to the display device 112 and not relative to the scene or to the imaging device 106.

Figures 2A-2E are schematic representations of a scene viewed from a second remote point of view. Figure 2A is a front view showing the two objects 102 and 104 that are within the field of view of the camera 106 with the scene capture area 108 in a different position than in Figure 1A. Figure 2B is a top view showing the two objects 102 and 104, the camera 106, and a scene capture area 108 in a different position than in Figure 1A. Figure 2C is a representation of an image 210 defined by the scene capture area 108 and captured by the camera 106. The image 210 includes representation of a portion of the object 104 visible, to the camera 106, in the scene capture area 108. The content of the image 210 differs from the contents of the image 110 as a result of the different positions of the user's head and therefore of the scene capture area 108 through which each of the images 210 and 110 are generated. Figure 2D is a top view showing the display device 112 and the user's head 114 that is in position different than that shown in Figure 1D. The position of the user's head 114 relative to the display device 112 may include a horizontal angle 216. Figure 2E is a side view showing the display device 112 and the user's head 114. The position of the user's head 114 relative to the display device 112 may further include a vertical angle 218 and/or a distance 220. The position of the user's head 114 relative to the display device 112, including the horizontal angle 216, the vertical angle 218 and the distance 220, may be used to determine the scene capture area 108 that defines a scene depicted in the image 210 and representing a remote point of view associated with the position of the user's head.

The scene depicted in the image 210 may be derived from the position of the user's head 114 relative to the display 112. The relative position of the user's head 114 may be derived from the horizontal angle 216, the vertical angle 218 and the distance 220 or alternatively may be derived from differences between horizontal angles 116 and 216, vertical angles 118 and 218 and distances 120 and 220. Changes in the position of the user's head may result in changes in the image presented on the display 112 that are analogous to the results of pan, tilt and/or zoom functions with a moveable camera but without the need to move the camera 106.

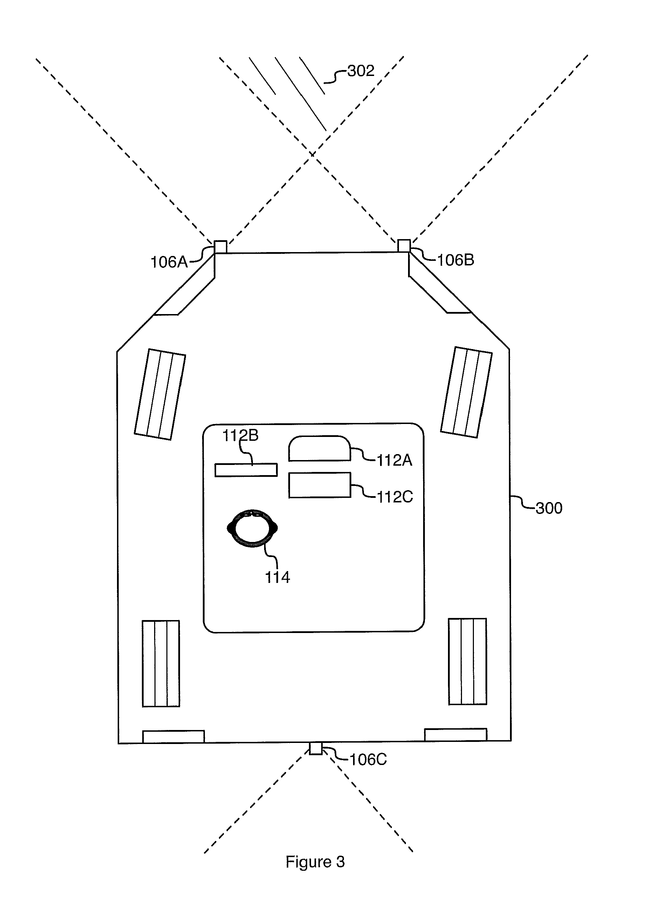

Figure 3 is a schematic representation (top view) of a vehicle showing alternative camera and display placements. The vehicle 300 may be, for example, an automobile, a transport vehicle or a mass-transit vehicle. One or more cameras may be positioned, for example, at the front of the vehicle 106A and 106B or at the rear of the vehicle 106C. When more than one camera, for example 106A and 106B, face in generally the same direction the cameras may have overlapping fields of view 302. One or more cameras may be positioned at different locations around, including above or below, the vehicle. Camera placement may advantageously be chosen to provide visibility to a driver, or passenger, of areas not easily directly observable from the user's typical head position 114 (e.g., directly in front of the vehicle or individual wheels when off-roading). One or more displays may be positioned in any of one or more locations that permit the driver or a passenger to view the displays. For example, a display 112A may be located near the top of a windscreen where a conventional rearview mirror would be placed, alternatively a display 112B may be placed in an instrument cluster, or a display 112C may be placed in a center console where it may comprise part of an infotainment system. Other locations, without limitation, may be used for each display 112 and more than one display 112 may be located in the same vehicle.

Each of the one or more displays 112 (including 112A, 112B and 112C) may comprise technologies such as, for example, liquid crystal display (LCD), led emitting diode (LED), cathode ray tube (CRT), plasma, digital light processing (DLP), projector, heads-up display, dual-view display or other display technologies. Each display 112 may provide a 2-dimensional (2D) representation of the image or alternatively each display 112 may provide a 3-dimensional (3D) representation of the image. When a display 112 is a 3D display, multiple cameras may be used, each providing an image captured from a different position that may be combined and/or processed to derive a 3D image.

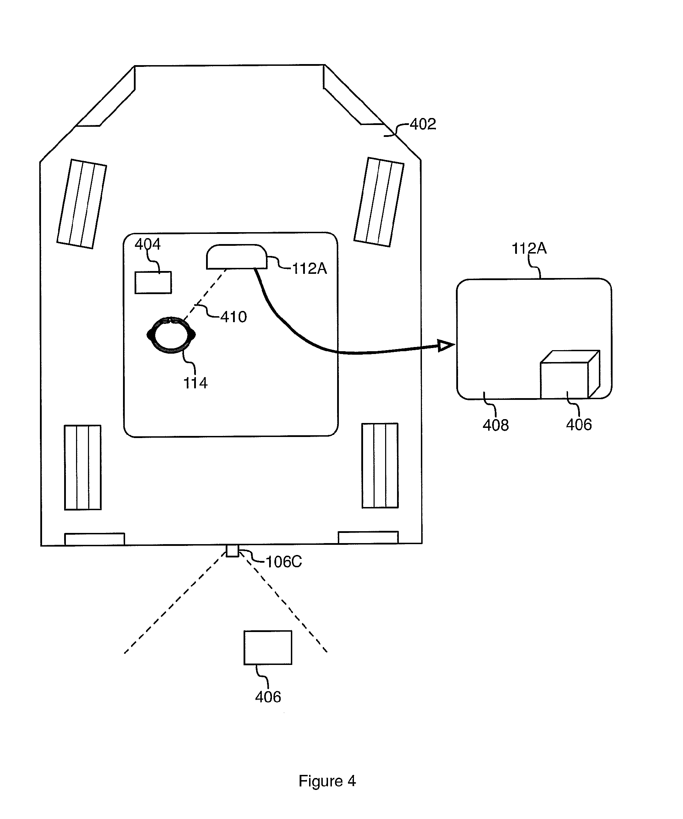

Figure 4 is a schematic representation (top view) of components of a system for remote point of view. The example system is installed in a vehicle 402. The camera 106C is positioned on the rear of the vehicle 402 and faces in a direction other than substantially the same direction in which the user (e.g., driver) 114 is facing (e.g., the camera faces rearward while the driver faces forward). The display 112A is substantially in front of the user 114 in a position similar to where a conventional rearview mirror would be installed. The image 408 may be processed and presented on the display 112A so that the image 408 has the appearance of being a reflection in a mirror (Figure 4 includes an expanded view of display 112A content). In this example, an object 406 is behind and to the right of the vehicle 402. While the object 406 is in the left portion of the field of view of camera 106C, the representation of object 406 in the image 408 is shown on the right side similar to how it would appear when reflected in a mirror placed in substantially the same location as display 112A.

The system may include a head tracking device 404. The position (or change of position) of the user's head 114 may be detected using the head tracking device 404. The head tracking device 404 may use optical or thermal imaging, sonar, laser, or other similar mechanisms to localize the user's head position 410 relative to the display 112A. The head tracking system may include a face detection or facial recognition system to assist in distinguishing the user's head 114.

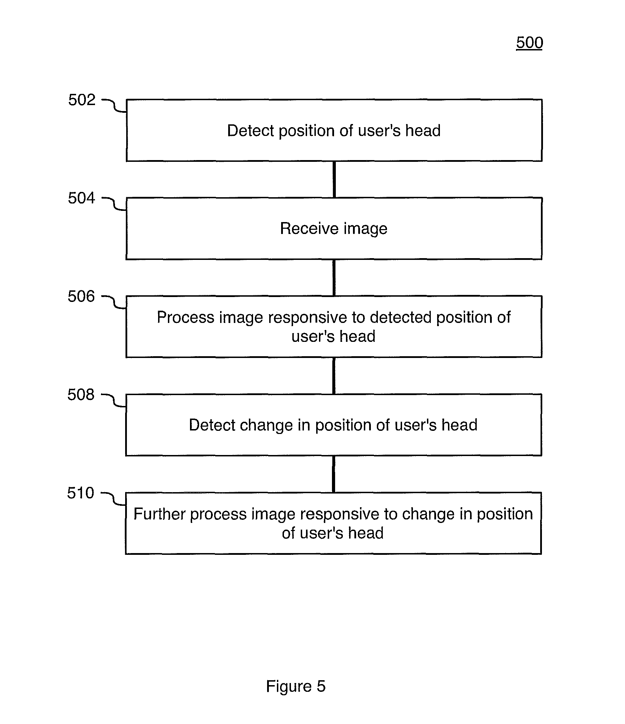

Fig. 5 is flow diagram representing a method for remote point of view. An example method 500 may include detecting a position of a user's head relative to a display 502. An image may be received 504. The image may comprise a video stream received from an imaging device (e.g., a camera), from a transmission medium (e.g., the Internet) or from a storage medium (e.g., a hard disk drive or other types of memory). The image may comprise multiple images that are received from multiple sources (e.g., two or more cameras) that may be combined or processed to derive a single image. The image may be processed for presentation (display) on the display responsive to the detected position of the user's head relative to the display 506. Processing the image may comprise processing a scene, captured in the image, in response to a 'point of view' derived from the position of the user's head relative to the display device. A change in the user's head position may be detected 508. The image may be further processed (or re-processed) for presentation (display) on the display responsive to the detected change in position of the user's head relative to the display 510. As the user's head position, relative to the display, changes the scene represented on the display may be changed responsively similar to when the user is directly viewing a scene and subsequently moves his/her head. The appearance and content of the scene may change as the user's 'point of view' (a.k.a. perspective) changes. The position of the user's head or the change in position of the user's head may be represented using any one or more of a vertical angle, a horizontal angle, a distance, a vector or other similar positional representations.

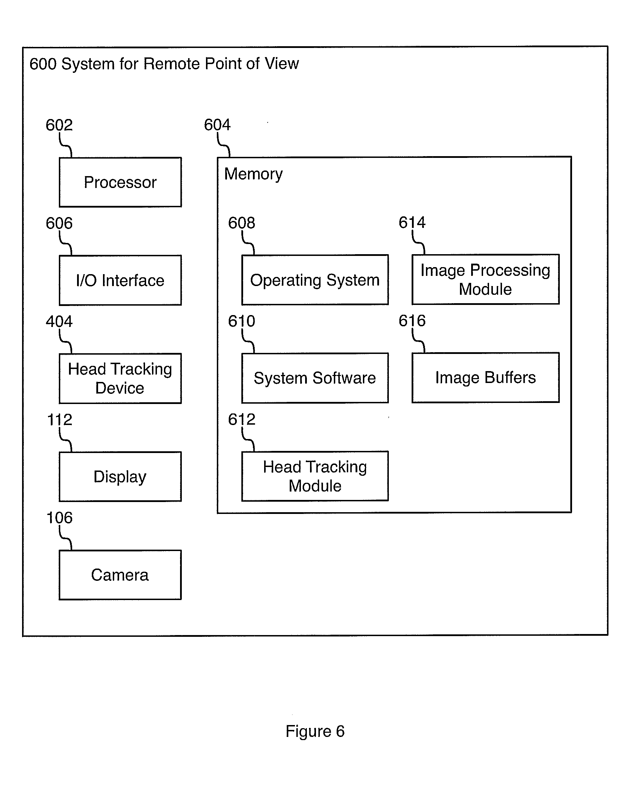

Fig. 6 is a further schematic representation of a system for remote point of view. The system 600 may comprise a processor 602, an input and output (I/O) interface 606, and memory 604. The system 600 may optionally further comprise any of a head tracking device 404, a display 112, and a camera 106. Any of the head tracking device 404, the display 112, and the camera 106 may be integral with or external to the system while providing inputs and/or receiving outputs from the system 600.

The processor 602 may comprise a single processor or multiple processors that may be disposed on a single chip, on multiple devices or distributed over more that one system. The processor 602 may be hardware that executes computer executable instructions or computer code embodied in the memory 604 or in other memory to perform one or more features of the system 600. The processor 602 may include a general purpose processor, a central processing unit (CPU), a graphics processing unit (GPU), an application specific integrated circuit (ASIC), a digital signal processor (DSP), a field programmable gate array (FPGA), a digital circuit, an analog circuit, a microcontroller, any other type of processor, or any combination thereof.

The memory 604 may comprise a device for storing and retrieving data, processor executable instructions, or any combination thereof. The memory 604 may include non-volatile and/or volatile memory, such as a random access memory (RAM), a read-only memory (ROM), an erasable programmable read-only memory (EPROM), or a flash memory. The memory 604 may comprise a single device or multiple devices that may be disposed on one or more dedicated memory devices or on a processor or other similar device. Alternatively or in addition, the memory 604 may include an optical, magnetic (hard-drive) or any other form of data storage device.

The memory 604 may store computer code, such as an operating system 608, system software 610, a head tracking module 612, an image processing module 614 and one or more image buffers 616. The computer code may include instructions executable with the processor 602. The computer code may be written in any computer language, such as C, C++, assembly language, channel program code, and/or any combination of computer languages. The memory 604 may store information in data structures including, for example, buffers for storing image content such as image buffers 616.

The I/O interface 606 may be used to connect devices such as, for example, camera 106, display 112 and head tracking device 404 to other components of the system 600.

The head tracking module 612 may use data received from the head tracking device 404 to derive the position, or a change of position, of the user's head 114 relative to the display 112. The image processing module 614 may use the position of the user's head 114 to process a received image for presentation on the display 112 in accordance with a remote point of view associated with the position of the user's head 114. The image buffers 616 may be used to store content of the received image and/or of the processed image. The processed image may be read from the image buffers 616 by a display controller (not illustrated) or other similar device for presentation on the display 112. Any of the functions of head tracking module 612 and the image processing module 614 may additionally or alternatively be rendered by the system software 610. The system software 610 may provide any other functions required for operation of the system 600.

The system and method for remote point of view described herein are not limited to use in a vehicle but may also be used in other environments and applications such as, for example, stationary remote monitoring of environments that are not easily accessible or are hazardous.

All of the disclosure, regardless of the particular implementation described, is exemplary in nature, rather than limiting. The system 600 may include more, fewer, or different components than illustrated in Figure 6. Furthermore, each one of the components of system 600 may include more, fewer, or different elements than is illustrated in Figure 6. Flags, data, databases, tables, entities, and other data structures may be separately stored and managed, may be incorporated into a single memory or database, may be distributed, or may be logically and physically organized in many different ways. The components may operate independently or be part of a same program or hardware. The components may be resident on separate hardware, such as separate removable circuit boards, or share common hardware, such as a same memory and processor for implementing instructions from the memory. Programs may be parts of a single program, separate programs, or distributed across several memories and processors.

The functions, acts or tasks illustrated in the figures or described may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing, distributed processing, and/or any other type of processing. In one embodiment, the instructions are stored on a removable media device for reading by local or remote systems. In other embodiments, the logic or instructions are stored in a remote location for transfer through a computer network or over telephone lines. In yet other embodiments, the logic or instructions may be stored within a given computer such as, for example, a CPU.

The system and method disclosed above with reference to the figures and claimed below permit a user to observe a scene, captured in an image, from a 'point of view' derived from the position of the user's head relative to a display representing the scene where the display and the user may be remote from the scene. Further, as the position of the user's head changes, the observed scene may be changed accordingly in effect allowing the user to look around the scene from different points of view (e.g., perspectives). In some embodiments a scene shown on the display may processed so that the scene appears to be a reflection in a mirror. The system and method may be used in various application where it is beneficial for the user to 'look around' in a remotely captured scene such as, for example, as a rear-view or sideview mirror in a vehicle, or for observing a blind-spot in front of a vehicle (e.g., a school bus or off-road vehicle).

While various embodiments of the system and method for remote point of view have been described, it will be apparent to those of ordinary skill in the art that many more embodiments and implementations are possible within the scope of the present invention. Accordingly, the invention is not to be restricted except in light of the attached claims and their equivalents.

## Claims

1. A method for remote point of view comprising:
detecting a position of a viewer's head relative to a display device (502);
receiving an image (504); and
processing the image (504) for display on the display device responsive to the detected position of the viewer's head relative to the display device (506).

2. The method for remote point of view of claim 1 further comprising:
detecting a change in the position of the viewer's head relative to the display device (508); and
processing the image for display on the display device responsive to the detected change in position of the viewer's head relative to the display device (510).

3. The method for remote point of view of claim 1, where processing the image for display on the display device (112) further comprising rendering a scene, captured in the image (110), from a point of view derived from the detected position of the viewer's head (114) relative to the display device (112).

4. The method for remote point of view of claim 1, where the image (110) includes a video stream received from any of an imaging device (106), a transmission medium, or a storage medium.

5. The method for remote point of view of claim 1, where the image (110) comprises two or more images.

6. The method for remote point of view of claim 1, where the image (110) is processed to represent a mirror image.

7. The method for remote point of view of claim 1, where the detected position of the viewer's head (114) relative to the display device (112) is represented by any of a horizontal angle (116), a vertical angle (118), a distance (120) and a vector.

8. The method for remote point of view of claim 1, where the image (110) is captured by one or more stationary cameras (106).

9. A system for remote point of view comprising:
one or more processors (602); and
memory (604) containing instructions (608, 610, 612, 614) executable by the one or more processors (602) to configure the system to implement the method of any of claims 1 to 8.

10. The system for remote point of view of claim 9, further comprising any of an input/output interface (606), a head tracking device (404), one or more displays (112) and one or more cameras (106).

11. The system for remote point of view of claim 9, where the system is installable in a vehicle (300).
